# DEMANDE DE BREVET EUROPEEN

(11) **EP 2 063 191 A1**
(43) Date de publication de la demande: **27.05.2009**
(21) Numéro de dépôt: 08300283.2
(22) Date de dépôt: 26.11.2008
(51) Int. Cl.: F24D 12/02, F24D 19/10

(54) **Dispositif de gestion d'une installation de chauffage et de production d'eau chaude sanitaire**

(30) Priorité: 26.11.2007 FR 0759300
(71) Demandeur: Chauffage de France CDF, 01100 Oyonnax (FR)
(72) Inventeur: Rodrigues, Manuel, 01100, Oyonnax (FR)
(74) Mandataire: Rhein, Alain

(57) **Abrégé**

Dispositif de gestion d'une installation de chauffage et de production d'eau chaude sanitaire, utilisant plusieurs générateurs de chaleur.

Il comporte :
- un module hydraulique (3) apte à stocker sous pression un fluide caloporteur tel que de l'eau, réchauffée par les différents générateurs, et à distribuer ledit fluide caloporteur dans les circuits à réguler (2),
- une unité centrale de collecte de données, connectée à au moins une sonde (S) de température, comprenant une horloge et un fichier de stockage de données relatives au coût de chacune des énergies utilisées dans les générateurs,
- et un calculateur apte, en fonction d'une pré-programmation, à commander au module hydraulique (3) l'alimentation du ou des circuits à réguler demandeurs, et à faire alimenter ledit module (3) par le générateur de chaleur, ou par une combinaison de générateurs dans des proportions particulières, en fonction de la demande et selon ce que le générateur, ou la combinaison de générateurs, peut fournir au meilleur coût.

## Description

La présente invention a pour objet un dispositif de gestion d'une installation de chauffage et de production d'eau chaude sanitaire, utilisant plusieurs générateurs de chaleur.

De manière classique, une installation de chauffage et de production d'eau chaude sanitaire utilise une seule source d'énergie telle qu'une chaudière bois, fioul, gaz ou électrique.

Dans un but écologique il est recommandé d'utiliser des énergies renouvelables, permettant de réduire l'effet de serre, et également de réaliser des économies par une réduction des frais de fonctionnement. Mais selon les zones géographiques où elles sont implantées, les installations utilisant une telle énergie sont souvent insuffisantes à répondre aux besoins de l'utilisateur, lequel doit utilisé en appoint un générateur d'énergie de type classique.

On connaît déjà des dispositifs de régulation de température tels que les thermostats, qui permettent de commander le fonctionnement d'un générateur de chaleur en fonction d'une programmation pré-établie et en fonction de la température ambiante.

On connaît également des installations comprenant un chauffe-eau solaire couplé à une source d'énergie d'appoint. Ces installations sont essentiellement réservées au chauffage d'eau chaude sanitaire, et elles comprennent un ballon de stockage d'eau chaude issue d'un chauffe-eau solaire, et intégrant un moyen de chauffage par le biais d'une source d'énergie d'appoint, ledit moyen pouvant consister en une résistance électrique ou en l'échangeur d'une chaudière fioul, gaz ou bois.

On connaît aussi des installations comprenant plusieurs circuits d'eau chaude sanitaire, dont l'un issu de l'énergie solaire, et fonctionnant soit en parallèle, soit en série. Dans le premier cas l'utilisation du circuit d'appoint ne permet l'utilisation de l'énergie solaire, dans le second il y a automatiquement fonctionnement du circuit d'appoint même s'il n'y a aucun besoin.

On connaît également des installations de chauffage utilisant rationnellement deux sources d'énergie, ou plus, comme c'est le cas de l'installation décrite dans le document WO 2006/096075. Ce document concerne un contrôleur électronique de gestion de production d'eau chaude. Il comprend un réservoir dans lequel est stockée l'eau chaude en provenance soit, de préférence, d'un chauffe eau solaire, soit d'une alimentation principale en eau réchauffée par une résistance électrique. Le réservoir est par ailleurs équipé de moyens de mesure de la température d'eau stockée dans le réservoir, de moyens de mesure du niveau d'eau dans ce réservoir, et de moyens de commande permettent de choisir la source d'énergie à employer pour chauffer l'eau destinée à être stockée dans le réservoir en fonction des besoins. En priorité, le contrôleur choisit l'énergie solaire, mais en absence de soleil, il fait son choix en fonction des prix de l'énergie qu'il connaît en temps réel, au travers d'une connexion à un site internet. Ce document décrit ainsi une installation de gestion et de stockage d'eau chaude destinée à être consommée.

Il n'existe pas de dispositif de gestion d'une installation de chauffage et de production d'eau chaude sanitaire, utilisant plusieurs générateurs de chaleur, permettant d'optimiser l'utilisation desdits générateurs de chaleur, la présente invention a pour but de remédier à cette carence en proposant un tel dispositif de gestion.

Le dispositif de gestion d'une installation de chauffage et de production d'eau chaude sanitaire, utilisant plusieurs générateurs de chaleur selon l'invention, se caractérise essentiellement en ce qu'il comporte :
- un module hydraulique apte d'une part à stocker sous pression un fluide caloporteur tel que de l'eau, réchauffé par lesdits différents générateurs de chaleur, et d'autre part à distribuer ledit fluide caloporteur dans les circuits à réguler en fonction de la demande,
- une unité centrale de collecte de données, connectée à au moins une sonde de température extérieure, au moins une sonde de température ambiante, au moins une sonde de température du fluide caloporteur pour chacun desdits circuits à réguler, comprenant une horloge et un fichier de stockage de données relatives au coût de chacune des énergies utilisées dans lesdits générateurs de chaleur,
- et un calculateur apte, en fonction d'une pré-programmation, à commander audit module hydraulique l'alimentation du ou des circuits à réguler demandeurs, et à faire alimenter ledit module par le générateur de chaleur, ou par une combinaison de générateurs dans des proportions particulières, en fonction de la demande et selon ce que ledit générateur, ou ladite combinaison de générateurs, peut fournir au meilleur coût.

Le dispositif de gestion selon l'invention enregistre le rendement du ou des générateurs de chaleur utilisant une énergie renouvelable et, en fonction de la demande, choisit, si nécessaire, d'utiliser en appoint une autre source de chaleur, le choix étant fonction du coût de celle-ci au moment de la demande.

Selon une caractéristique additionnelle du dispositif de gestion selon l'invention, le module hydraulique se présente sous la forme d'un ballon de stockage sous pression, auquel sont connectés, d'une part les générateur de chaleur, au travers de circuits hydrauliques dédiés comprenant un conduit d'entrée et un conduit de retour, et d'autre part les moyens de diffusion de chaleur, au travers de circuits hydrauliques dédiés, comprenant chacun un conduit de départ connecté à un collecteur disposé dans ledit module hydraulique, et un conduit de retour débouchant dans ledit module hydraulique, lesdits circuits hydrauliques dédiés étant connectés par ailleurs chacun à un moyen de diffusion de la chaleur.

Selon une autre caractéristique additionnelle du dispositif de gestion selon l'invention, les générateurs de chaleur consistent en plusieurs générateurs parmi les suivants : une chaudière au fioul ou au gaz, une chaudière au bois, un capteur solaire, un générateur aérothermique, aquathermique ou géothermique.

Selon une autre caractéristique additionnelle du dispositif de gestion selon l'invention, le module hydraulique comporte un système propre de chauffage au moyen de résistances électriques.

Selon une autre caractéristique additionnelle du dispositif de gestion selon l'invention, les moyens de diffusion de chaleur susceptibles d'être alimentés par le module hydraulique, consistent en des moyens de diffusion de chaleur choisi parmi une installation de radiateurs de chauffage central, un plancher chauffant, un circuit de chauffage d'une piscine, ou un ballon d'eau chaude sanitaire.

Les avantages et les caractéristiques du dispositif selon l'invention, ressortiront plus clairement de la description qui suit et qui se rapporte au dessin annexé, lequel en représente un mode de réalisation non limitatif.

Dans le dessin annexé:
- la figure 1 représente une vue schématique en élévation avec coupe partielle, d'un dispositif de gestion d'une installation de chauffage et de production d'eau chaude sanitaire, utilisant plusieurs générateurs de chaleur selon l'invention.
- la figure 2 représente une vue schématique de dessus du même dispositif.
- la figure 3 représente une vue schématique d'une installation de chauffage et de production d'eau sanitaire incorporant le même dispositif selon l'invention.

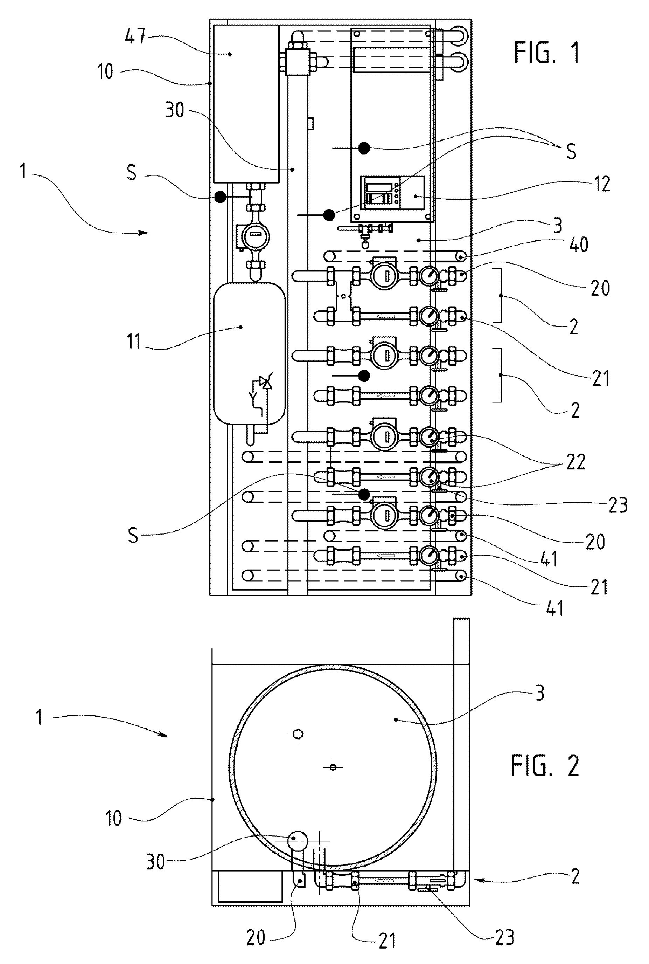

En référence aux figures 1 et 2, on peut voir qu'un dispositif 1 de gestion d'une installation de chauffage et de production d'eau chaude sanitaire, utilisant plusieurs générateurs de chaleur, selon l'invention, comprend dans une enveloppe 10, une multiplicité de circuits hydrauliques 2, en l'occurrence quatre, comprenant chacun un conduit de départ 20, et un conduit retour 21, ainsi qu'un circulateur 22, des sondes de température et des vannes 23, tous connectés à un module hydraulique 3 se présentant sous la forme d'un ballon de stockage sous pression, au travers d'un collecteur de départ 30.

On notera que la présente description met en oeuvre un dispositif de gestion posé au sol, sachant qu'il est tout a fait aisé de concevoir un dispositif mural.

Les circuits hydrauliques 2 sont destinés au transfert de calories, via un fluide caloporteur tel que de l'eau, vers des moyens de diffusion tels que des radiateurs de chauffage central, un plancher chauffant, un circuit de chauffage d'une piscine, ou un ballon d'eau chaude sanitaire.

Le dispositif 1 comporte de plus des circuits hydrauliques 4, également connectés au module 3, comportant des conduits d'apport 40 et des conduits de retour 41, et qui sont alimentés par des générateurs de chaleur.

Le dispositif 1 comporte également les accessoires que l'on trouve habituellement dans un circuit de chauffage, à savoir un vase d'expansion 11, un tableau de gestion 12, ainsi que des sondes de température S permettant de mesurer la température de chacun des circuits hydrauliques 2 et 4.

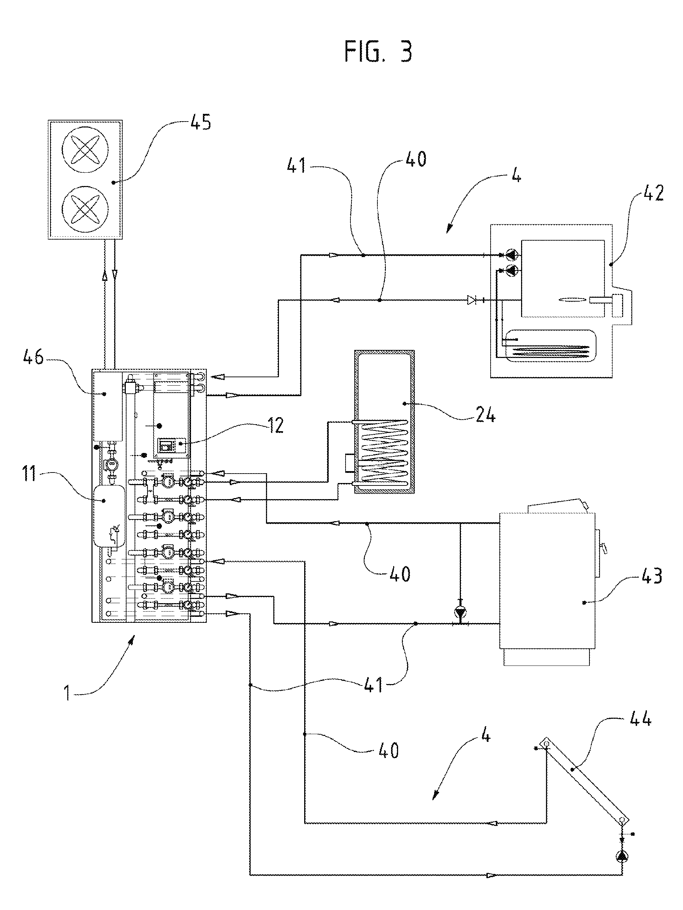

En référence maintenant à la figure 3, on peut voir une installation de chauffage et de production d'eau chaude sanitaire, de conception non limitative, incorporant le dispositif de gestion selon l'invention.

Sur cette figure on retrouve le dispositif 1 de gestion, comprenant les circuits hydrauliques 2, ainsi que les circuits hydrauliques 4.

Sont également représentés des générateurs de chaleur, reliés aux circuits hydrauliques 4. Ainsi, l'installation de chauffage comporte essentiellement une chaudière 42 au fioul ou au gaz, une chaudière 43 au bois, un ballon d'eau chaude sanitaire 24 et, éventuellement, de manière moins essentielle, des capteurs solaires 44 et des capteurs aérothermiques 45 associés à un échangeur condenseur 46, sachant qu'il est également possible d'incorporer d'autres sources de production de chaleur, des capteurs géothermiques par exemple.

On notera également que le module hydraulique 3 peut être équipé de résistances électriques permettant d'en chauffer le contenu, lorsque les générateurs de chaleur n'ont pas un rendement suffisant, ou bien lorsque le coût d'utilisation de ces résistances est considéré comme optimal.

On notera également que l'installation est équipée d'une sonde de traitement pour éviter la formation de boue dans les circuits de chauffage ainsi que dans les échangeurs.

Les générateurs de chaleur sont susceptibles d'alimenter en en eau chaude le ballon 3, lequel peut alimenter un ou plusieurs moyens de diffusion au travers des circuits hydrauliques 2.

Le dispositif de gestion selon l'invention comporte par ailleurs une unité centrale qui collecte les données recueillies par les différentes sondes S des circuits hydrauliques 2 et 4, ainsi que par des sondes de mesure de la température ambiante et de la température extérieure.

L'unité centrale incorpore une horloge, ainsi qu'un fichier de données relatives au coût de chacune des énergies utilisées dans lesdits générateurs de chaleur.

L'unité centrale intègre un calculateur qui permet, au travers d'une pré-programmation, de commander, en fonction des besoins et de la disponibilité des générateurs de chaleur, l'alimentation par le ballon 3 de l'un et/ou l'autre moyen de diffusion, et l'alimentation de ce dernier par un générateur, par une combinaison de plusieurs générateurs, en les faisant fonctionner simultanément ou alternativement selon une séquence particulière, en sorte d'optimiser l'utilisation de chacun des générateurs, et de fournir le service demandé au meilleur coût.

## Revendications

1. Dispositif de gestion d'une installation de chauffage et de production d'eau chaude sanitaire, utilisant plusieurs générateurs de chaleur (42, 43, 44, 45) **caractérisé en ce qu'**il comporte :
- un module hydraulique (3) apte d'une part à stocker sous pression un fluide caloporteur tel que de l'eau, réchauffé par lesdits différents générateurs de chaleur (42, 43, 44, 45), et d'autre part à distribuer ledit fluide caloporteur dans les circuits à réguler (2) en fonction de la demande,
- une unité centrale de collecte de données, connectée à au moins une sonde de température extérieure, au moins une sonde de température ambiante, au moins une sonde (S) de température du fluide caloporteur pour chacun desdits circuits à réguler (2), comprenant une horloge et un fichier de stockage de données relatives au coût de chacune des énergies utilisées dans lesdits générateurs de chaleur (42, 43, 44, 45),
- et un calculateur apte, en fonction d'une pré-programmation, à commander audit module hydraulique (3) l'alimentation du ou des circuits à réguler demandeurs, et à faire alimenter ledit module (3) par le générateur de chaleur, ou par une combinaison de générateurs dans des proportions particulières, en fonction de la demande et selon ce que ledit générateur, ou ladite combinaison de générateurs, peut fournir au meilleur coût.

2. Dispositif de gestion selon la revendication 1, **caractérisé en ce que** le module hydraulique (3) se présente sous la forme d'un ballon de stockage sous pression, auquel sont connectés, d'une part les générateur de chaleur (42, 43, 44, 45), au travers de circuits hydrauliques dédiés (4) comprenant un conduit d'entrée (40) et un conduit de retour (41), et d'autre part les moyens de diffusion de chaleur, au travers de circuits hydrauliques dédiés (2), comprenant chacun un conduit de départ (20) connecté à un collecteur (30) disposé dans ledit module hydraulique, et un conduit de retour (21) débouchant dans ledit module hydraulique (3), lesdits circuits hydrauliques dédiés étant connectés par ailleurs chacun à un moyen de diffusion de la chaleur.

3. Dispositif de gestion selon la revendication 1 ou la revendication 2, **caractérisé en ce que** les générateurs de chaleur consistent en plusieurs générateurs parmi les suivants : une chaudière au fioul ou au gaz (42), une chaudière au bois (43), un capteur solaire (44), un générateur aérothermique (45), aquathermique ou géothermique.

4. Dispositif de gestion selon l'une quelconque des revendications précédentes, **caractérisé en ce que** le module hydraulique (3) comporte un système propre de chauffage au moyen de résistances électriques.

5. Dispositif de gestion selon l'une quelconque des revendications précédentes, **caractérisé en ce que** les moyens de diffusion de chaleur susceptibles d'être alimentés par le module hydraulique (3), consistent en des moyens de diffusion de chaleur choisi parmi une installation de radiateurs de chauffage central, un plancher chauffant, un circuit de chauffage d'une piscine, ou un ballon d'eau chaude sanitaire (24).
